(19) **Europäisches Patentamt**
**European Patent Office**
**Office européen des brevets**

(11) **EP 4 053 937 A1**

(12) **EUROPEAN PATENT APPLICATION**

(43) Date of publication:
**07.09.2022 Bulletin 2022/36**

(21) Application number: **21382187.9**

(22) Date of filing: **05.03.2021**

(51) International Patent Classification (IPC):
**H01M 4/131** $^{(2010.01)}$   **H01M 4/1391** $^{(2010.01)}$
**H01M 4/505** $^{(2010.01)}$   **H01M 10/054** $^{(2010.01)}$
**C01G 31/02** $^{(2006.01)}$

(52) Cooperative Patent Classification (CPC):
**H01M 4/505; C01G 31/02; H01M 4/131;**
**H01M 4/1391; H01M 10/054**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Consejo Superior de Investigaciones Científicas
(CSIC)**
**28006 Madrid (ES)**

• **Universidad Complutense De Madrid**
**28040 Madrid (ES)**

(72) Inventors:
• **BLACK SERRA, Ashley Philip**
**08193 Cerdanyola del Vallès (Barcelona) (ES)**
• **PALACIN PEIRO, M. Rosa**
**08193 Cerdanyola del Vallès (Barcelona) (ES)**
• **ARROYO DE DOMPABLO, Maria Elena**
**28040 Madrid (ES)**

(74) Representative: **Pons**
**Glorieta Rubén Darío 4**
**28010 Madrid (ES)**

(54) **ELECTRODE OF A MIXED OXIDE FOR CALCIUM BATTERIES AND ITS MANUFACTURING
METHOD**

(57)   The invention relates to a positive electrode comprising calcium and vanadium oxide of formula $Ca_xV_2O_4$ wherein x is a value between 0 and 1 as the active material. The invention also relates to a calcium-based secondary cell comprising said electrode and to a non-aqueous calcium-based secondary battery.

**EP 4 053 937 A1**

## Description

The invention relates to a positive electrode that includes a positive-electrode active material and its manufacturing method, said positive-electrode active material being capable of accepting and releasing calcium ions. The invention also relates to a calcium-based secondary cell comprising said electrode and to a non-aqueous calcium-based secondary battery comprising such a calcium-based secondary cell.

## BACKGROUND ART

Secondary (i.e. rechargeable) electrochemical cells and batteries are a power source widely used in information-related devices, communication devices (such as personal computers, camcorders and cellular phones) as well as in the automobile industry or in stationary power storage devices. Conventional lithium-based cells typically include a positive electrode (also referred to as "cathode") and a negative electrode (also referred to as "anode") whose active materials are capable of accepting and releasing lithium ions, as well as an electrolyte arranged between the electrodes and including lithium ions.

Calcium is much more abundant in nature than lithium and, despite the high atomic weight of Ca with respect to Li, the bivalent nature of Ca means that it could in principle act as a suitable material for rechargeable batteries exhibiting high energy density, even if it has proven difficult so far to identify suitable positive electrode materials and Ca batteries are very underdeveloped as compared to their Li counterparts.

Thus, to date, the number of materials that have been shown to electrochemically react with calcium in a reversible manner is very limited and they operate at rather low potential, which limits the energy density achievable for the battery.

For this reason, the present invention proposes a different material to those known in the state of the art for use in electrodes of calcium batteries. The material used in the present invention presents several advantages as explained below in the description of the invention.

## SUMMARY OF THE INVENTION

The present invention discloses a new use of the oxide of formula $Ca_xV_2O_4$ wherein x is a value between 0 and 1 (e.g.: $CaV_2O_4$) as an active material of a positive electrode in a calcium battery.

Then, a first aspect of the present invention relates to an electrode for calcium batteries characterized in that the active electrode material is the calcium and vanadium oxide of formula $Ca_xV_2O_4$, wherein x is a value between 0 and 1; more preferably, the calcium and vanadium oxide is $CaV_2O_4$.

The active electrode material is the material that is oxidized or reduced when used in a battery (on charge or discharge).

In preferred embodiment, the electrode is a positive electrode.

The term "positive electrode" is intended to refer to the electrode undergoing oxidation on charge and reduction on discharge of the battery. The positive electrode acts as the cathode on discharge and the anode on charge.

Preferably, the electrode comprises additional components as electrically conductive additives or polymers.

The electrically conductive additives are selected preferably from the list comprising: carbon, metals or ceramics, preferably these electrically conductive additives have an average particle size between 1 and 50 nm.

The term "ceramics" as used in this disclosure refers to substantially inorganic nonmetallic material. For example: $Al_2O_3$, $SiO_2$, $ZrO_2$, MgO, and $CeO_2$.

Particulate carbon may be selected within one or more of carbon blacks such as ketjen black, acetylene black, channel black, furnace black, lamp black, and thermal black; graphite, such as natural graphite, e.g., scaly graphite, artificial graphite, and expanded graphite; activated carbon from charcoal and coal; carbon fibers obtained by carbonizing synthetic fibers and petroleum pitch-based materials; carbon nanofibers; tubular carbon, such as carbon nanotubes; and graphene. Nanometals/nanoceramics may include Ni or other metals, $Al_2O_3$, $SiO_2$, $ZrO_2$, MgO, and/or $CeO_2$ and may have an average particle size equal to or lower than about 15 nm (between 1 and 50 nm).

The polymers are selected preferably from the list comprising: polyethylene, polypropylene, polytetrafluoroethylene (PTFE), polyvinylidene fluoride (PVDF), styrene-butadiene rubber (SBR), carboxymethylcellulose (CMC), tetrafluoroethylenehexafluoropropylene copolymers, tetrafluoroethylenehexafluoropropylene copolymers (FEP), tetrafluoroethylene-perfluoroalkyl vinyl ether copolymers (PFA), vinylidene fluoride-hexafluoropropylene copolymers, vinylidene, fluoride-chlorotrifluoroethylene copolymers, ethylenetetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, and mixtures thereof may be preferred. These polymers act as binders.

In a preferred embodiment, the electrode comprises $Ca_xV_2O_4$ as defined above, preferably $CaV_2O_4$, an electrically conductive additive and a polymer. In a more preferred embodiment, the electrode contains $Ca_xV_2O_4$ as defined above, preferably $CaV_2O_4$, conductive additive and a polymer in a weight ratio of 96-60/2-20/2-20, more preferably 80/10/10

$CaV_2O_4$ exhibits an orthorhombic structure (*Pnam,* a = 9.20 Å, b = 10.67 Å, and c = 3.00 Å) consisting of two zigzag chains of distorted edge- and corner-sharing $VO_6$ octrahedra that run parallel to the c axis, with the Ca ions situated in tunnels between the chains.

A second aspect of the present invention refers to a method of manufacturing the electrode described in the first aspect of the present invention, comprising the following steps:

> a) preparation of the oxide $Ca_xV_2O_4$ as defined above, preferably $CaV_2O_6$, by reducing $CaV_2O_6$, and
> b) deposition of the prepared oxide $Ca_xV_2O_{4\,4}$ on a conducting substrate.

In a preferred embodiment, the method comprises, previously to the deposition step an additional step of mixing $Ca_xV_2O_4$ with a conductive additive and/or a polymer (polymeric binder). To prepare de mixture, a solvent may also be used such as water or N-Methyl-2-pyrrolidone (NMP), forming a slurry. After deposition, a drying step. The drying step can be carried out a temperature between 15 and 200°C or under vacuum.

$CaV_2O_6$ precursor was obtained by solid state reaction between $CaCO_3$ and $V_2O_5$ preferably at 500°C to 700°C for 6 to 18 hours, air atmosphere.

In a preferred embodiment, the reduction step a) is carried out in the presence of pure $H_2$ as reducing agent, preferably at 600 to 900°C, more preferably 700°C and preferably for 2 to 8 hours, more preferably 4 h.

The electrodes can be produced by coating a conducting substrate that acts as a current collector with the $Ca_xV_2O_4$ or with the mixture of $Ca_xV_2O_4$ and a conductive additive and/or a polymer. Generally, the mixture is in the form of a slurry since the mixture is prepared using a solvent as indicated above.

The electrically conducting substrate is selected preferably from carbon, stainless steel or aluminium foils. More preferably, the conductive substrate is aluminium foil. Preferably, the thickness of the conducting substrate is between 5 and 30 micrometers.

A third aspect of the present invention refers to a calcium-based secondary cell comprising:

- a negative electrode that includes a negative-electrode active material
- a positive electrode as defined in the first aspect of the present invention,
- an electrolyte arranged between the negative electrode and the positive electrode, said electrolyte comprising a calcium salt.

The term "negative electrode" (also called counter electrode) is intended to refer to the electrode undergoing oxidation on discharge and reduction on charge of the battery. The counter electrode acts as the anode on discharge and the cathode on charge.

The electrolyte is an electrolyte compatible with the electrodes, that is, the electrolyte has high conductivity of $Ca^{2+}$ ions, is an electronic insulator and has high electrochemical stability. In a preferred embodiment, this electrolyte comprises a calcium salt dissolved in an organic solvent or in an ionic liquid.

In a more preferred embodiment, the electrolyte is a solution of calcium tetrafluoroborate ($Ca(BF_4)_2$), calcium perchlorate ($Ca(ClO_4)_2$) calcium hexafluorophosphate ($Ca(PF_6)_2$), calcium tetrafluorosulfonylimide ($Ca(TFSI)_2$) or ($Ca(N(SO_2CF_3)_2)_2$), calcium triflate $Ca(Tf)_2$, calcium trifluoromethanesulfonate ($Ca(CF_3SO_3)_2$) and mixtures thereof in an organic solvent. More preferably, the electrolyte is a solution of calcium tetrafluoroborate ($Ca(BF_4)_2$).

In a preferred embodiment, said organic solvent may be selected from the group comprising: propylene carbonate (PC), ethylene carbonate (EC), butylene carbonate (BC), vinylene carbonate (VC), fluoroethylenecarbonate (FEC), dimethyl carbonate (DMC), diethylcarbonate (DEC), ethyl methyl carbonate (EMC), N,N-dimethylformamide (DMF), fluoroethylene carbonate (FEC), γ-buryrolactone, γ-valerolactone, tetrahydrofuran (THF), 2-methyltetrahydrofuran, dimethoxyethane (DME), ethylene glycol dimethyl ether, triethylene glycol dimethyl ether (TEDGE), tetraethyleneglycol dimethyl ether (TEDGE), and combinations thereof may be preferred. More preferably, the solvent is a mixture of ethylene carbonate (EC) and propylene carbonate (PC), and even more preferably in a proportion 1:1 v/v.,

In a preferred embodiment, this aspect refers to the use of the oxide $Ca_2MnO_{3.5}$ as the active electrode material of a calcium-based secondary battery and more preferably as active positive electrode material of a calcium-based secondary battery.

In a preferred embodiment, the negative electrode comprises graphite, carbon, meso-carbon microbead (MCMB), activated carbon, metallic calcium or a calcium alloy CaxMy where M= Sb, Ge, Al, Pb, Cu, Cd, Ga, Bi, In, Tl, Hg, Ag, Au, Pt, and Pd, Sn or Si; x is a value between 5 and 0.2 and y is a value between 5 and 0.2.

The invention further relates to a calcium-based secondary battery comprising an electrode as defined in the first aspect of the present invention or a calcium-based secondary cell as described in the second aspect of the present invention.

During battery charging, the following reaction takes place in the positive electrode that contains $CaV_2O_4$:

$$CaV_2O_4 \rightarrow Ca_{1-x}V_2O_4 + x\,Ca^{2+} + 2x\,e^-$$

During discharge the reverse reaction takes place.

Other aspect of the invention refers to the use of the oxide $Ca_xV_2O_4$ as defined above, preferably $CaV_2O_4$, as an active electrode material, more particularly, as an active positive electrode material.

In a preferred embodiment, this aspect refers to the use of the oxide $Ca_xV_2O_4$ as defined above, preferably $CaV_2O_4$, as the active electrode material of a calcium-based secondary battery and more preferably as the active positive electrode material of a calcium-based secondary battery.

A last aspect of the present invention relates to the use of an electrode as defined in the first aspect of the present invention as part of a calcium-based secondary battery or for manufacturing a calcium-based secondary battery.

The oxide $Ca_xV_2O_4$ as defined above, preferably $CaV_2O_4$, presents the next advantages to be used as an active material of an electrode:

- It contains calcium in its composition, which makes it possible to use negative electrodes that do not contain calcium.
- It has a moderate redox potential, which implies a lower degradation of the electrolyte during battery operation and a longer average life of the batteries.

The potential viability of $CaV_2O_4$ as an electrode material was evaluated by DFT (Density functional theory) calculations that allowed estimating the approximate operating potential as well as the energy barriers for the migration of calcium ions in the crystalline structure, which were found to be 2.5 V and 0.6 eV approximately.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

**BRIEF DESCRIPTION OF THE DRAWINGS**

Figure 1. (A) Pathway for Ca diffusion in $CaV_2O_4$. Color code: Ca in grey, vacant Ca site in white, O in black and Mn omitted for clarity. (B) Calculated energy barrier for $Ca^{2+}$ migration using two different supercells.

Figure 2. (A) Structure and (B) Rietveld fit of laboratory X-ray powder diffraction pattern for $CaV_2O_4$

in the *Pbnm* space group.

Figure 3. (A) Characteristic voltage profiles versus specific capacity expressed as mole of virtually de-inserted $Ca^{2+}$. The corresponding ex-situ X-ray diffraction (XRD) patterns at the end of oxidation together with the pristine sample are displayed in (B) and an expanded region in (C).

Figure 4. (A) Characteristic voltage profiles versus specific capacity expressed in $mAhg^{-1}$ and as mole of virtually de-inserted $Ca^{2+}$. The corresponding selected in-situ XRD are displayed in (B).

Figure 5. Rietveld fit of laboratory X-ray powder diffraction pattern for a electrochemically oxidized sample of $Ca_{1-x}V_2O_4$ up to equivalent x=1 in $Ca(BF_4)_2$ in ethylene carbonate: propylene carbonate 50:50v/v electrolyte at room temperature and at a Crate of C/100. Upper ticks correspond to calculated reflections for remaining $CaV_2O_4$ and lower ticks to calculated reflections for oxidized phase in orthorhombic space group *Pbnm*

**EXAMPLES**

The invention shall be illustrated below by means of assays performed by the inventors that reveal the effectiveness of the product of the invention.

**Example 1. Computational investigation**

The calculations have been performed using the ab-initio total-energy and molecular dynamics program VASP (Vienna Ab-initio Simulation Program) developed at the Universitat Wien. Total energy calculations based on Density Functional Theory (DFT) were performed within the Generalized Gradient Approximation (GGA), with the exchange and correlation functional form developed by Perdew, Burke, and Ernzerhof (PBE). The interaction of core electrons with the nuclei is described by the Projector Augmented Wave (PAW) method. The energy cut off for the plane wave basis set was kept fix at a constant value of 600 eV throughout the calculations. The integration in the Brillouin zone is done on an appropriate set of k-points determined by the Monkhorst-Pack scheme. A convergence of the total energy close to 10 meV per formula unit is achieved with such parameters. All crystal structures were fully relaxed (atomic positions, cell parameters and volume). The final energies of the optimized geometries were recalculated so as to correct the changes in the basis set of wave functions during relaxation. To take electron correlation into account, the total energies of the GGA-optimized compounds have been calculated using the GGA+U method, with $U_{eff}$ of 3 eV for the d- states of V.

Ca deinsertion from $CaV_2O_4$ is considered up to the limit composition $V_2O4$ ($V^{3+}/V^{4+}$ redox couple).

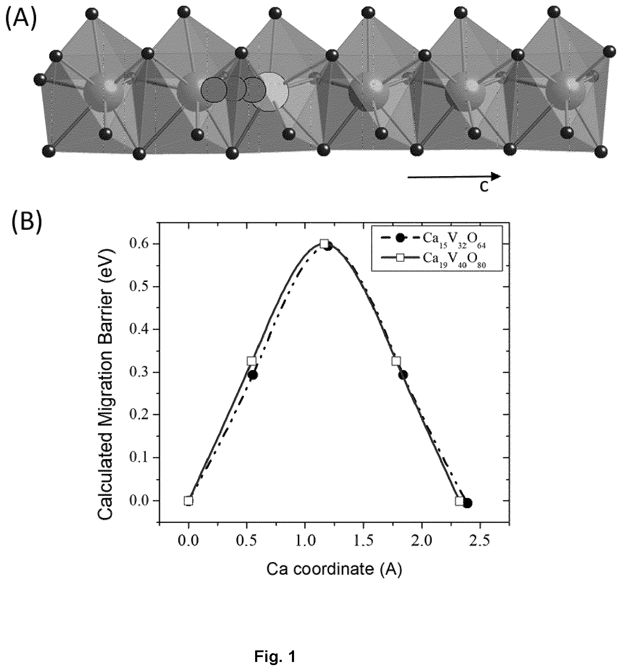

The calculated average voltage is 2.5 V (GGA+U). $Ca^{2+}$ mobility in $CaV_2O_4$ is investigated using 1x1x4 and 1x1x5 supercells where one Ca site is removed creating a vacancy (compositions $Ca_{15}V_{32}O_{64}$ and $Ca_{19}V_{40}O_{80}$, respectively). DFT calculations are performed using the Nudged Elastic Band method (NEB) as implemented in VASP. Constant volume calculations were performed for three intermediate images. To calculate the energy at the saddle point, cubic splines were fit through the images along each hop. Figure 1A shows the Ca diffusion pathway along the tunnel occupied by Ca ions. The calculated energy migration barriers (0.6 eV, **Figure 1B**) suggest that mono-dimensional conductivity may occur in the material.

## Example 2: Preparation of electrode containing the oxide $CaV_2O_4$

While most of the previous studies refer to the synthesis of single crystal, a solid state synthesis route to achieve bulk powder has been reported at 1200°C, involving the use of gas mixtures with high percent of $H_2$. $CaV_2O_6$ precursor is prepared by solid state reaction between $CaCO_3$ and $V_2O_5$ (650°C, 12 hours, air atmosphere) and treated under $H_2$ gas at 700°C for 4 hours to yield pure $CaV_2O_4$. In order to evaluate calcium de-insertion in $CaV_2O_4$ galvanostatic cycling test in several cell configuration and temperature have been conducted.

The electrodes are produced by coating a slurry on a metal foil that acts as a current collector. The slurry is prepared by mixing active material, a conductive additive such as carbon black and a polymeric binder such as PVFD in a weight ratio of 80/10/10. To achieve the right viscosity, NMP is added as long as the slurry exhibits a flow. Mixing is done by means of ball milling in an agate container with 3 agate balls of 1 cm diameter at 500 rpm for 2 h with change of the rotating way every 30 min using a PM100 Retsch planetary Ball Miller. The slurries are tape cast on a 20 $\mu$m thick aluminum foil (Goodfellow) with a 400 $\mu$m Doctor-Blade and dried at 120°C under vacuum for 2 h. Once dried, 1 $cm^2$ disk electrodes are cut and pressed at 5 tons.

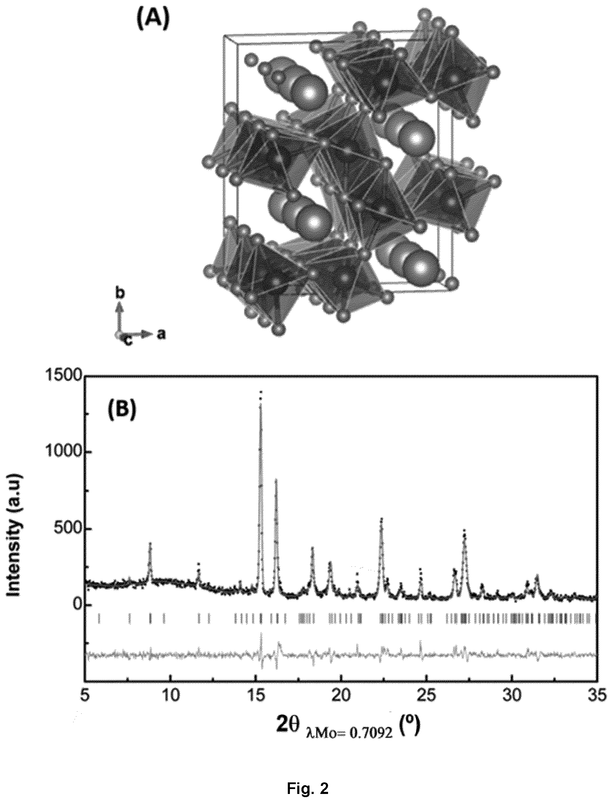

$CaV_2O_4$ exhibits an orthorhombic structure (*Pnam,* a = 9.20 Å, b = 10.67 Å, and c = 3.00 Å) consisting of two zigzag chains of distorted edge- and corner-sharing $VO_6$ octrahedra that run parallel to the c axis, with the Ca ions situated in tunnels between the chains (see **Figure 2A**).

**Figure 2B** shows the Rietveld fits to laboratory X-ray powder diffraction patterns for $CaV_2O_4$ as prepared by the above-described synthesis method. Refinement was performed in the *Pbnm* space group and lattice parameters were found to be a=10.673(2), b=9.213(1) and c=2.9981(4).

## Example 3. Electrochemical studies

A three electrode Swagelok cell was used for the electrochemical test. Ca metal (AlfaAesar, 99.5%) or AC (Kynol, ACC-509220) were used as counter electrodes (CE). Either Ca metal or an Ag wire were used as reference electrodes (RE). The electrolyte used was 0.3 M $Ca(BF_4)_2$ dissolved in a 1:1 (v/v) mixture of ethylene carbonate (EC, Aldrich anhydrous 99.0%) and propylene carbonate (PC, Aldrich anhydrous 99.0%).Aluminum current collector was used for the positive electrode, stainless steel for the counter and reference electrodes. Two sheets of Whatman® Grade GF/D borosilicate glass fiber were used as separators. Electrolyte preparation and cell assembling were done in Ar filled glove box with less than 1 ppm of $O_2$ and $H_2O$. Said electrode (typical loading ca. 2 mg/$cm^2$ of active material) was used galvanostatic cycling with potential limit (GCPL) test at a C/50 rate at room temperature or at 100°C.

Electrodes were recovered after oxidation (calcium extraction) and powder sealed inside a capillary to perform X-ray diffraction.

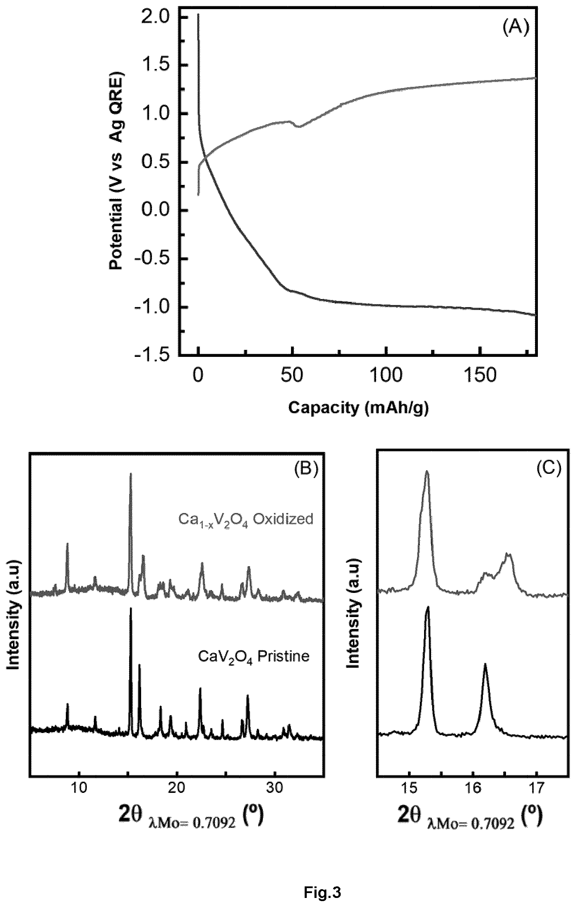

Voltage vs capacity for a cell conducted in 0.45 M $Ca(BF_4)_2$, EC:PC electrolyte and using activated carbon as negative electrode is displayed in **Figure 3A**. The Upon oxidation, a first sloping region up to capacity values of about 80 mAhg$^{-1}$ is followed by pseudoplateaus at a potential of 1.3 V vs Ag quasi reference electrode, and a similar trend was seen upon reduction despite with lower achieved capacity. The ex-situ XRD patterns corresponding to samples at the end of oxidation displayed in **Figures 3B and 3C** clearly show the formation of the secondary phase upon oxidation with main reflections at $2\theta$ = 8.1°, 15.25°, 16.6°, 22.5°, and 27.2°.

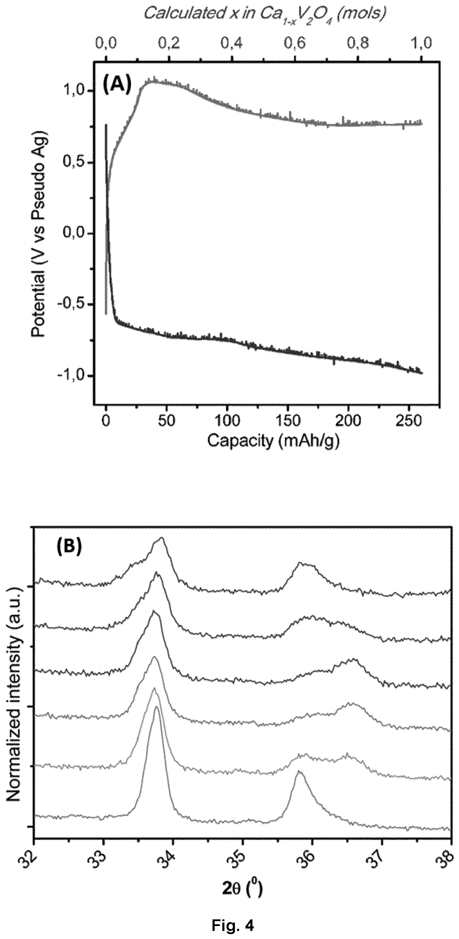

In order to get further insights into the structural evolution of $Ca_{1-x}V_2O_4$ upon cycling a in-operando test was performed at room temperature for $CaV_2O_4$ electrodes employing activated carbon fabric as counter electrode and $LiPF_6$ in EC:DMC as electrolyte. The characteristic voltage vs capacity profiles of $CaV_2O_4$ electrodes subjected to GCPL at a C/50 rate are presented in **Figure 4A**. Upon oxidation a similar voltage profile as those described in $Ca(BF_4)_2$ electrolyte is observed at 0.8 V vs C.E. Upon reduction a polarization of 1,5V situates the reduction pesudoplateau at -0.7 V vs C.E. The selected in-operando X-ray diffraction patterns displayed in **Figures 4B** clearly show the formation of the same secondary phase described above. Additionally, the patterns collected upon reduction clearly show the reversion of the oxidized phase to a new phase with mean reflections at $2\theta$ = 33.8° and 36.0° ($Cu\lambda$= 1.5406 Å). The phase observed upon reduction is closely related to the pristine material but with a slightly different lattice parameters as the reinserted ion is in a large amount lithium ion as the test was conducted in $LiPF_6$ electrolyte and hence intercalation of $Li^+$ upon reduction takes place.

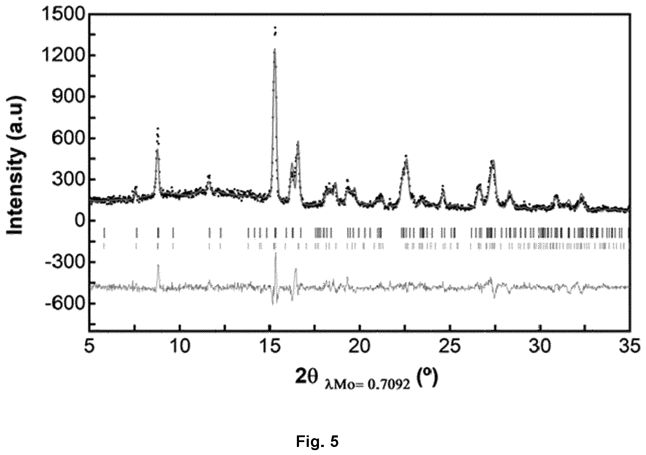

The observed and calculated laboratory X-ray diffraction patterns obtained by Rietveld refinement for the electrochemically oxidized sample is shown in **Figure 5**. The refinements indicate the presence of two orthorhombic phases with space group *Pbnm*. The first corresponds to the remaining unoxidized material and the second with main reflections at $2\theta$ = 15.2° and 16.5° is consistent with the formation of an oxidized phase with slightly smaller lattice parameters a= 10.703(2), b= 9.211(2) and c= 2.9020(4).

## Claims

1. Electrode for calcium batteries **characterized in that** the active electrode material is the calcium and vanadium oxide of formula $Ca_xV_2O_4$ wherein x is a value between 0 and 1.

2. Electrode according to claim 1, wherein the calcium and vanadium oxide is $CaV_2O_4$.

3. Electrode according to claim 1 or 2, wherein the electrode comprises electrically conductive additives selected from the list comprising: carbon, metals or ceramics.

4. Electrode according to any of claims 1 to 3, wherein the electrode comprises a polymer selected from the list comprising: polyethylene, polypropylene, polytetrafluoroethylene (PTFE), polyvinylidene fluoride (PVDF), styrene-butadiene rubber (SBR), carboxymethylcellulose (CMC), tetrafluoroethylenehexafluoropropylene copolymers, tetrafluoroethylenehexafluoropropylene copolymers (FEP), tetrafluoroethylene-perfluoroalkyl vinyl ether copolymers (PFA), vinylidene fluoride-hexafluoropropylene copolymers, vinylidene, fluoride-chlorotrifluoroethylene copolymers, ethylenetetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, and mixtures thereof

5. Electrode according to any of claims 1 to 4 wherein it is a positive electrode.

6. Method of manufacturing the electrode according to any of the preceding claims, comprising the following steps:

   - preparation of the oxide $Ca_xV_2O_4$, wherein x is a value between 0 and 1, by reducing $CaV_2O_6$, and
   - deposition of the prepared oxide $Ca_xV_2O_4$ on a electrically conducting substrate.

7. Method according to claim 6 wherein the reduction step a) is carry out in the presence of a pure $H_2$.

8. Method according to claim 7 wherein the reduction step is carried out at a temperature between 600 to 900°C for 2 to 8 hours.

9. A calcium-based secondary cell comprising:

   - a negative electrode
   - a positive electrode as defined in any of claims 1 to 5,
   - an electrolyte arranged between the negative electrode and the positive electrode, said electrolyte comprising a calcium salt.

10. Calcium-based secondary cell according to claim 9 wherein the negative electrode comprises graphite, carbon, meso-carbon microbead (MCMB), activated carbon, metallic calcium or a calcium alloy.

11. Calcium-based secondary cell according to claim 9 or 10 wherein the electrolyte is a solution of calcium tetrafluoroborate ($Ca(BF_4)_2$), calcium perchlorate ($Ca(ClO_4)_2$) calcium hexafluorophosphate ($Ca(PF_6)_2$), calcium tetrafluorosulfonylimide ($Ca(TFSI)_2$) or ($Ca(N(SO_2CF_3)_2)_2$), calcium triflate $Ca(Tf)2$, calcium trifluoromethanesulfonate ($Ca(CF_3SO_3)_2$) or mixtures thereof in an organic solvent.

12. Calcium-based secondary battery comprising an electrode as defined in claims 1-5 or a calcium-based secondary cell as described in claims 9-11.

13. Use of the oxide of formula formula $Ca_xV_2O_4$ ,wherein x is a value between 0 and 1, as an active electrode material.

14. Use of the oxide, according to claim 13, as an active positive electrode material of a calcium-based secondary battery.

15. Use of the electrode of any of claims 1 to 5 as part of a calcium-based secondary battery.

(A)

(B)

**Fig. 1**

**(A)**

**(B)**

Fig. 2

Fig.3

Fig. 4

Fig. 5

Europäisches
Patentamt

European
Patent Office

Office européen
des brevets

# EUROPEAN SEARCH REPORT

Application Number

EP 21 38 2187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LU WANG ET AL: "Searching Ternary Oxides and Chalcogenides as Positive Electrodes for Calcium Batteries", CHEMISTRY OF MATERIALS, vol. 33, no. 14, 16 July 2021 (2021-07-16), pages 5809-5821, XP055836042, US ISSN: 0897-4756, DOI: 10.1021/acs.chemmater.1c01992 * abstract * * sections "2.4 Assessment of CaV2O4 and CaNb2O4 Electrode ", "3. Conclusions" * * tables I, II * * figures 2-4 * | 1,5,9, 12-15 | INV. H01M4/131 H01M4/1391 H01M4/505 H01M10/054 C01G31/02 |
| X | WO 2018/170925 A1 (SHENZHEN INST ADV TECH [CN]) 27 September 2018 (2018-09-27) * paragraphs [0004] - [0006], [0012], [0015], [0016], [0022] - [0027], [0038], [0047] * * claims 1, 4, 6-12, 14 * | 1,3-5,9, 10,12-14 | |
| A | | 2,6-8 | |
| A | CN 102 557 132 A (UNIV JILIN NORMAL) 11 July 2012 (2012-07-11) * abstract * * paragraphs [0001], [0006] - [0009], [0014] - [0017] * | 1,2,6-8 | TECHNICAL FIELDS SEARCHED (IPC) H01M C01G |
| A | MONTI DAMIEN ET AL: "Multivalent Batteries-Prospects for High Energy Density: Ca Batteries", FRONTIERS IN CHEMISTRY, vol. 7, February 2019 (2019-02), XP055837661, DOI: 10.3389/fchem.2019.00079 * abstract * * figure 1 * * table 1 * | 1-14 | |

The present search report has been drawn up for all claims

| Place of search | Date of completion of the search | Examiner |
|---|---|---|
| The Hague | 10 September 2021 | Riba Vilanova, Marta |

**EP 4 053 937 A1**

## ANNEX TO THE EUROPEAN SEARCH REPORT
## ON EUROPEAN PATENT APPLICATION NO.

EP 21 38 2187

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | | Publication date | Patent family member(s) | Publication date |
|---|---|---|---|---|
| WO 2018170925 | A1 | 27-09-2018 | NONE | |
| CN 102557132 | A | 11-07-2012 | NONE | |

EPO FORM P0459

For more details about this annex : see Official Journal of the European Patent Office, No. 12/82